# EUROPEAN PATENT APPLICATION

(11) **EP 4 761 399 A1**
(43) Date of publication of application: **17.06.2026**
(21) Application number: 24870795.2
(22) Date of filing: 25.09.2024
(51) Int. Cl.: H04W 68/00, H04W 28/24

(54) **COMMUNICATION METHOD AND APPARATUS**

(30) Priority: 28.09.2023 CN 202311295149
(71) Applicant: HUAWEI TECHNOLOGIES CO., LTD., Shenzhen 518129 (CN)
(72) Inventor: LI, Chenwan, Shenzhen, Guangdong 518129 (CN); WU, Yiling, Shenzhen, Guangdong 518129 (CN); CHEN, Lei, Shenzhen, Guangdong 518129 (CN); WANG, Yan, Shenzhen, Guangdong 518129 (CN)
(74) Representative: Pfenning, Meinig & Partner mbB
(86) International application number: PCT/CN2024/121147
(87) International publication number: WO 2025/067251

(57) **Abstract**

Embodiments of this application provide a communication method and apparatus, and relate to the communication field, so that scheduling based on a QoS parameter can be implemented on a terminal device with low complexity. The method includes: receiving a quality of service QoS parameter for a first service from a core network element; paging at least one terminal apparatus for executing the first service; and scheduling, based on the QoS parameter when the at least one terminal apparatus for executing the first service is paged, the at least one terminal apparatus to execute the first service.

## Description

This application claims priority to Chinese Patent Application No. 202311295149.2, filed with the China National Intellectual Property Administration on September 28, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

With the evolution and development of 5th generation (5th generation, 5G) Internet of Things (Internet of Things, IoT), there is an increasing demand for terminal devices with lower power consumption. A radio frequency identification (radio frequency identification, RFID) technology provides technical support for low power consumption, supporting microwatt-level power consumption. Usually, a terminal device with lower power consumption is also a terminal device with low complexity, for example, a tag (tag, which may also be referred to as an RFID terminal). The tag receives a downlink signal by using a medium-to-low frequency ring oscillator with low precision and low power consumption or an oscillator completely without a local oscillator. When the tag is in operation, communication energy and carriers are provided by a reader/writer, and communication is performed based on a reflected carrier. Specifically, the reader/writer (reader) sends an excitation signal to the tag to power the tag, and the tag receives signaling sent by the reader/writer and sends signaling to the reader/writer by using a reflected signal. In this way, the reader/writer can identify an identity (identity, ID) of the tag, and perform operations such as reading and writing on the tag.

Currently, a quality of service (quality of service, QoS) parameter per (per) terminal device is a QoS parameter allocated in a session establishment process after the terminal device accesses a network. This complex process of session establishment and QoS parameter configuration for each terminal device is not applicable to a terminal device with low complexity. Consequently, scheduling based on a QoS parameter cannot be implemented on the terminal device with low complexity.

### SUMMARY

Embodiments of this application provide a communication method and apparatus, so that QoS-guaranteed service transmission can be implemented on a terminal device with low complexity.

To achieve the foregoing objective, this application adopts the following technical solutions.

A first aspect provides a communication method. The method may be performed by an access network device, or may be performed by a component of an access network device, for example, a processor, a chip, or a chip system of the access network device, or may be implemented by a logic module or software that can implement all or some functions of an access network device. The method includes: receiving a quality of service QoS parameter for a first service from a core network element; paging at least one terminal apparatus for executing the first service; and scheduling, based on the QoS parameter when the at least one terminal apparatus for executing the first service is paged, the at least one terminal apparatus to execute the first service.

Based on the communication method, the access network device obtains, from the core network element, a QoS parameter for each service (a service-level OoS parameter), for example, the QoS parameter for the first service, and may schedule, based on the QoS parameter for the first service, the at least one paged terminal apparatus to execute the first service. This requires no configuration of a QoS parameter for each terminal apparatus, simplifying a QoS parameter processing procedure between a terminal apparatus and a network, and reducing signaling overheads, so that QoS-based flexible scheduling can be implemented on the terminal apparatus (for example, a terminal device with low complexity). In an embodiment of this application, the core network element may be an access and mobility management network element. For example, the access and mobility management network element is an access and mobility management function (access and mobility management function, AMF) in 5G.

In a possible design scheme, paging the at least one terminal apparatus for executing the first service may include: receiving first indication information from the core network element, where the first indication information indicates that the first service needs to be executed; and paging, based on the first indication information, the at least one terminal apparatus for executing the first service. Based on this design scheme, the access network device may trigger paging on the terminal apparatus based on the first indication information delivered by the core network element, to schedule, based on the QoS parameter for the first service, the at least one paged terminal apparatus to execute the first service.

In a possible design scheme, the first indication information and the QoS parameter may be carried in a same message, to reduce signaling overheads.

In a possible design scheme, the QoS parameter may include at least one of the following: a data transmission delay requirement for executing the first service, a priority of the first service, and a reliability requirement for transmitting the first service. The data transmission delay requirement for executing the first service is a data transmission delay requirement for one or more terminal apparatuses. For example, a data transmission delay may include a delay requirement for obtaining data of the first service collected by the one or more terminal apparatuses. The priority of the first service may be an execution priority of the first service, and can ensure a ranking of the first service for execution when there are a plurality of services. The reliability requirement for transmitting the first service is for ensuring reliability of data transmission of the first service.

In a possible design scheme, the method provided in embodiments of this application may further include: sending second indication information to the core network element, where the second indication information indicates that the first service is executed by the terminal apparatus. Based on this design scheme, the access network device may further notify the core network element of an execution status of the first service by using the second indication information, for the core network element to trigger a subsequent service.

In a possible design scheme, the method provided in embodiments of this application may further include: sending third indication information to the core network element, where the third indication information indicates that scheduling of the first service is stopped or data transmission of the first service is stopped. Based on this design scheme, the access network device may further actively send the third indication information to the core network element, to notify the core network element of a case in which scheduling of the first service is stopped or a case in which data transmission of the first service is stopped, so that a service transmission procedure can be flexibly started and terminated. For example, the access network device may send the third indication information in a case of limited resources, or may send the third indication information when a QoS requirement is not met, to implement service transmission control of the first service.

In a possible design scheme, the third indication information may include a reason for stopping the scheduling of the first service or a reason for stopping the data transmission of the first service, to avoid a misoperation performed by the core network element due to lack of awareness of the reason.

In a possible design scheme, the method provided in embodiments of this application may further include: receiving fourth indication information from the core network element, where the fourth indication information indicates an access network device to stop data transmission of the first service. In this way, the access network device may stop data transmission of the service based on the fourth indication information delivered by the core network element, so that a service transmission procedure can be flexibly started and terminated.

A second aspect provides a communication method. The method may be performed by a first terminal apparatus, or may be performed by a component of a first terminal apparatus, for example, a processor, a chip, or a chip system of the first terminal apparatus, or may be implemented by a logic module or software that can implement all or some functions of a first terminal apparatus. The method includes: receiving identification information from an access network device, where the identification information is for identifying a quality of service QoS parameter; and sending the identification information to the access network device when a first service needs to be executed.

Based on the communication method, after obtaining the QoS parameter from a core network, the access network device may allocate, to the first terminal apparatus, the identification information for identifying the QoS parameter, so that when the first terminal apparatus needs to execute the first service, the access network device may determine the corresponding QoS parameter based on the identification information reported by the first terminal apparatus. This simplifies a QoS obtaining procedure, requires no complete QoS negotiation and determining procedure with both the access network and the core network each time the first terminal apparatus initiates a service, and can simply determine the corresponding QoS parameter based on the identification information, implementing flexible scheduling of the first terminal apparatus (for example, a terminal device with low complexity) to execute the first service.

In a possible design scheme, receiving the identification information from the access network device may include: receiving, in a process in which a first terminal apparatus initiates registration, a registration accept message from the access network device, where the registration accept message includes the identification information. Usually, a service procedure is after a registration procedure. The identification information is allocated to the first terminal apparatus in a registration process, so that the first terminal apparatus can directly use the identification information in a subsequent service procedure to trigger scheduling of the first service by the access network device without obtaining the identification information again, thereby simplifying the procedure and reducing a service waiting delay.

In a possible design scheme, receiving the identification information from the access network device may include: receiving, in a process in which a first terminal apparatus performs transmission with the access network device, a first message from the access network device, where the first message includes the identification information. In an embodiment of this application, the first message may be an RRC message. Therefore, the access network device may alternatively allocate the identification information to the first terminal apparatus in a process of data transmission with the first terminal apparatus. In a scenario in which the first terminal apparatus accesses the network again, the identification information may be directly used to trigger scheduling of the first service by the access network device without obtaining the identification information again, thereby simplifying the procedure and reducing a service waiting delay.

In a possible design scheme, sending the identification information to the access network device may include: sending, in a process in which the first terminal apparatus initiates random access again, the identification information to the access network device. Based on this design scheme, the access network device may receive the identification information from the first terminal apparatus in a next random access process, and trigger service scheduling for the first terminal apparatus based on the identification information.

In a possible design scheme, sending the identification information to the access network device may include: sending a radio resource control (radio resource control, RRC) message to the access network device, where the RRC message includes the identification information. Based on this design scheme, the access network device may alternatively obtain the identification information from the RRC message from the first terminal apparatus, and trigger service scheduling for the first terminal apparatus based on the identification information.

In a possible design scheme, the QoS parameter may include at least one of the following: a priority of the first service, a data transmission delay requirement for executing the first service, and a reliability requirement for transmitting the first service.

In a possible design scheme, the identification information may be an identifier of the first terminal apparatus, or a QoS identifier, or a context identifier of the first terminal apparatus.

A third aspect provides a communication method. The method may be performed by an access network device, or may be performed by a component of an access network device, for example, a processor, a chip, or a chip system of the access network device, or may be implemented by a logic module or software that can implement all or some functions of an access network device. The method includes: receiving a quality of service QoS parameter from a core network element; and sending identification information to a first terminal apparatus, where the identification information is for identifying the QoS parameter.

In a possible design scheme, the method provided in embodiments of this application may further include: receiving the identification information from the first terminal apparatus; and scheduling, based on the identification information, the first terminal apparatus to execute a first service.

In a possible design scheme, receiving the identification information from the first terminal apparatus may include: receiving, in a process in which the first terminal apparatus initiates random access again, the identification information from the first terminal apparatus.

In a possible design scheme, receiving the identification information from the first terminal apparatus may include: receiving a radio resource control RRC message from the first terminal apparatus, where the RRC message includes the identification information.

In a possible design scheme, sending the identification information to the first terminal apparatus may include: sending, in a process in which the first terminal apparatus initiates registration, a registration accept message to the first terminal apparatus, where the registration accept message includes the identification information.

In a possible design scheme, sending the identification information to the first terminal apparatus may include: sending, in a process in which the first terminal apparatus performs transmission with an access network device, a first message to the first terminal apparatus, where the first message includes the identification information.

In a possible design scheme, the method provided in embodiments of this application may further include: still retaining context of the first terminal apparatus if the first terminal apparatus is released to an inactive state, or reselection occurs, or a cell handover to another access network device occurs, where the context of the first terminal apparatus includes the QoS parameter.

In a possible design scheme, the QoS parameter may include at least one of the following: a priority of the first service, a data transmission delay requirement for executing the first service, and a reliability requirement for transmitting the first service.

In a possible design scheme, the identification information may be an identifier of the first terminal apparatus, or a QoS identifier, or a context identifier of the first terminal apparatus.

For technical effects of the method according to the third aspect, refer to related descriptions of technical effects of the method according to the second aspect. Details are not described herein again.

A fourth aspect provides a communication apparatus. The communication apparatus includes a module, unit, or means (means) for performing the method according to any one of the first aspect to the third aspect. The module, unit, or means may be implemented by hardware, or may be implemented by software, or may be implemented by hardware executing corresponding software. The hardware or software includes one or more modules or units corresponding to the foregoing functions, for example, a transceiver module and a processing module. For example, the transceiver module is configured to indicate a transceiver function of the communication apparatus, and the processing module is configured to perform a function of the communication apparatus other than the transceiver function.

In a possible design scheme, the transceiver module may include a receiving module and a sending module. The sending module is configured to implement a sending function of the communication apparatus according to the fourth aspect, and the receiving module is configured to implement a receiving function of the communication apparatus according to the fourth aspect.

In a possible design scheme, the communication apparatus according to the fourth aspect may further include a storage module, and the storage module stores a program or instructions. When the processing module executes the program or the instructions, the communication apparatus according to the third aspect may be enabled to perform the method according to any one of the first aspect to the third aspect.

The communication apparatus according to the fourth aspect may be a terminal apparatus or an access network device, or may be a chip (system) or another part or component that may be disposed in a terminal apparatus or an access network device, or may be an apparatus including a terminal apparatus or an access network device. This is not limited in this application.

A fifth aspect provides a communication apparatus including a processor. The processor is configured to perform the method according to any one of the first aspect to the third aspect.

In some possible designs, the communication apparatus further includes a memory. The memory is configured to store a computer program or instructions. Correspondingly, the processor is configured to execute the computer program or the instructions stored in the memory, to enable the communication apparatus to perform the method according to any one of the first aspect to the third aspect.

In a possible design scheme, the processor may be integrated with the memory.

In some possible designs, the communication apparatus further includes a communication interface. The communication interface is configured to communicate with a module outside the communication apparatus.

The communication apparatus according to the fourth aspect may be a terminal apparatus or an access network device, or may be a chip (system) or another part or component that may be disposed in a terminal apparatus or an access network device, or may be an apparatus including a terminal apparatus or an access network device. This is not limited in this application.

In some possible designs, when the communication apparatus is a chip system, the apparatus may include a chip, or may include a chip and another discrete component.

A sixth aspect provides a communication apparatus including a transceiver and a processor. The transceiver is configured to exchange information between the communication apparatus and another communication apparatus, and the processor executes program instructions to perform the method according to any one of the first aspect to the third aspect.

In a possible design scheme, the communication apparatus according to the sixth aspect may further include a memory. The memory and the processor may be integrated together, or may be disposed separately. The memory may be configured to store a computer program and/or data in the method according to any one of the first aspect to the third aspect.

It may be understood that, when the communication apparatus according to any one of the fourth aspect to the sixth aspect is a chip, the foregoing sending action/function may be understood as outputting, and the foregoing receiving action/function may be understood as inputting.

A seventh aspect provides a computer-readable storage medium. The computer-readable storage medium stores a computer program or instructions. When the computer program or the instructions are run on a communication apparatus, the communication apparatus is enabled to perform the method according to any one of the first aspect to the third aspect.

An eighth aspect provides a computer program product including instructions. When the computer program product is run on a communication apparatus, the communication apparatus is enabled to perform the method according to any one of the first aspect to the third aspect.

A ninth aspect provides a communication system including an access network device configured to perform the method according to the first aspect.

A tenth aspect provides a communication system including a first terminal apparatus configured to perform the method according to the second aspect and an access network device configured to perform the method according to the third aspect.

### BRIEF DESCRIPTION OF DRAWINGS

FIG. 1 is a diagram of an architecture of an RFID system;
FIG. 2 is a flowchart of interaction between a tag and a reader/writer;
FIG. 3 is a schematic flowchart of 5G QoS establishment;
FIG. 4 is a diagram of an architecture of a communication system according to an embodiment of this application;
FIG. 5 is a diagram of a scenario applied to a communication system according to an embodiment of this application;
FIG. 6 is a diagram of another scenario applied to a communication system according to an embodiment of this application;
FIG. 7 is a diagram of still another scenario applied to a communication system according to an embodiment of this application;
FIG. 8 is a diagram of still another scenario applied to a communication system according to an embodiment of this application;
FIG. 9 is a schematic flowchart of a communication method according to an embodiment of this application;
FIG. 10 is a schematic flowchart of another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following describes technical solutions in this application with reference to accompanying drawings.

The technical solutions in embodiments of this application may be applied to various communication systems, such as a universal mobile telecommunications system (universal mobile telecommunications system, UMTS), a code division multiple access (code division multiple access, CDMA) system, a wireless local area network (wireless local area network, WLAN), a wireless fidelity (wireless fidelity, Wi-Fi) system, a wired network, a vehicle-to-everything (vehicle-to-everything, V2X) communication system, a device-to-device (device-to-device, D2D) communication system, an Internet of Vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5G mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Before embodiments of this application are described, related technologies in embodiments of this application are described.

### 1. RFID

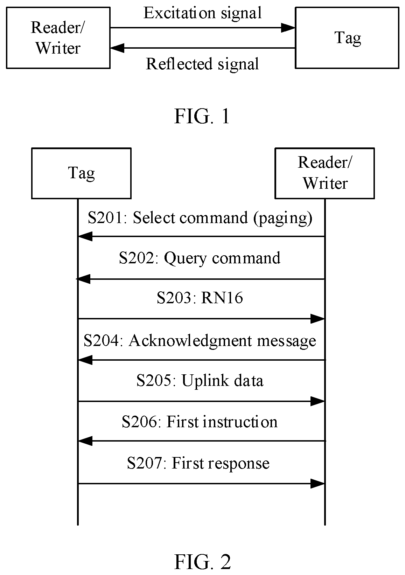

An RFID technology is a non-contact automatic identification technology. Refer to FIG. 1. As shown in FIG. 1, an RFID system includes a tag and a reader/writer. The reader/writer is integrated with an antenna, where the antenna is configured for transmission and reception, or the reader/writer and the antenna are disposed separately. Specifically, the reader/writer sends an excitation signal to the low-cost tag to power the tag, and the tag receives signaling sent by the reader/writer and sends signaling to the reader/writer by using a reflected signal. In this way, the reader/writer can identify an ID of the tag, and the reader/writer can perform operations such as reading and writing on the tag. The reader/writer may further perform other operations on the tag. This is not specifically limited herein.

The reader/writer may also be referred to as a reader (reader), an exciter, an excitation source, a radio frequency source, an interrogator (interrogator), or the like. This is not limited. The excitation signal may also be referred to as a carrier signal, a radio frequency signal, a radio signal, or the like. This is not limited. The tag (tag) receives a downlink signal by using a medium-to-low frequency ring oscillator with low precision and low power consumption or by using completely no local oscillator. The tag may also be referred to as a terminal device with low power consumption, a tag device, a passive apparatus, or the like.

5G ambient Internet of Things (ambient Internet of Things, A-IoT) emerges due to the advantage of the RFID communication technology in low power consumption. To meet an ultra-low power consumption requirement, a tag in A-IoT also receives a downlink signal by using a medium-to-low frequency ring oscillator with low precision and low power consumption or by using completely no local oscillator. In this reception manner, power consumption of the tag for downlink reception can be further reduced. However, for this low-power-consumption reception manner, only amplitude detection, for example, envelope detection can be performed, because only a low-precision ring oscillator cannot ensure accurate demodulation of phase information of the signal.

The tag has low costs and low design complexity, but poor coverage and limited application scenarios. Coverage enhancement design is required during 5G A-IoT research. Currently, the 3rd generation partnership project (3rd generation partnership project, 3GPP) standard agrees that 5G A-IoT may include the following three types of devices:
device A: no energy storage, inability to generate signals independently, use of reflection for transmission;
device B: energy storage, inability to generate signals independently, use of reflection for transmission; and
device C: energy storage, ability to generate signals independently, active video element for transmission.

### 2. Inventory

A tag receives mask information and a flag bit that are specified by a reader/writer. If storage area information of the tag matches the received mask information, and a flag bit stored in the tag is consistent with the received flag bit, the tag may enter an inventory procedure, that is, initiate random access to the reader/writer and complete corresponding instructions indicated by the reader/writer.

### 3. Interaction between a tag and a reader/writer

FIG. 2 is a schematic flowchart of interaction between a tag and a reader/writer. As shown in FIG. 2, tag access includes the following steps.

S201: The reader/writer sends a select (select) command to the tag. Correspondingly, the tag receives the select command from the reader/writer.

The select command is for selecting one tag or a group of tags for access. The select command may include a selected (selected, SL) identifier (or an inventoried (inventoried) identifier) and a mask (mask).

The tag receives the select command from the reader/writer, and determines whether information stored at a corresponding location in a storage area of the tag is consistent with mask information in the select command. If the stored information is consistent with the mask information, the tag considers that the tag meets a read/write selection criterion. In this case, the tag may perform status setting on an inventoried flag bit, for example, set a state A of a first inventoried flag bit to a state B. On the contrary, the tag that does not match a selection condition of the reader/writer sets the first inventoried flag bit from the state B to the state A. A/B herein may also be replaced with 0/1. This is not limited.

S202: The reader/writer sends a query (Query) command to the tag. Correspondingly, the tag receives the query command from the reader/writer.

The query command is for initializing an inventory cycle. The query command carries flag bit information (such as a selected identifier or an inventoried identifier) and a parameter Q for the tag to calculate a total slot number for random access that is allocated by the reader/writer.

The tag that meets the selection criterion of the reader/writer determines whether flag bit information of the tag is consistent with the flag bit information in the query command of the reader/writer. If the flag bit information of the tag is consistent with the flag bit information in the query command of the reader/writer, the tag obtains, through calculation based on a Q value, that a slot range for access is [0, 2^{Q}-1]. The tag may randomly select a value k from [0, 2^{Q}-1] and store the value as a count value (counter). Each time the tag receives a query reply (QueryRep) command, counter = counter - 1. When counter is 0, the tag may send a random number, for example, a 16-bit random number or pseudo-random number (16-bit random or pseudo-random, RN16).

In a possible case, after the reader/writer sends Query, a corresponding slot is 0, and then a tag whose initial counter value is 0 is generated. The tag may initiate access after receiving Query.

S203: The tag sends RN16 to the reader/writer. Correspondingly, the reader/writer receives RN16 from the tag.

RN16 indicates a temporary ID of the tag. After the tag receives the query command, if the tag determines counter = 0, a 16-bit random number is selected as RN16, and the RN16 is fed back to the reader/writer. If the reader/writer detects that the tag feeds back RN16, the inventory process is normally performed, and the reader/writer performs a next action. Specifically, the RN16 is carried in a message (message, Msg) 3 for sending, and Msg3 is also referred to as message 3 or a third message.

S204: The reader/writer sends an acknowledgment message (ACK) to the tag. Correspondingly, the tag receives the acknowledgment message from the reader/writer.

ACK indicates that the reader/writer successfully receives RN16 sent by the tag. ACK includes a 16-bit random number previously sent by the tag, for the tag to check whether the ACK is matched.

S205: The tag sends uplink data to the reader/writer. Correspondingly, the reader/writer receives the uplink data from the tag.

The tag determines that the 16-bit random number included in ACK is the same as RN16 sent by the tag, indicating successful random access of the tag. Then, the tag sends the uplink data to the reader/writer, for example, an electronic product code (electronic product code, EPC), where the EPC indicates a real ID of the tag.

Optionally, after the tag completes random access, the following interaction process further exists between the tag and the reader/writer.

S206: The reader/writer sends a first instruction to the tag. Correspondingly, the tag receives the first instruction from the reader/writer.

The first instruction indicates the tag to perform a read operation, a write operation, a read/write operation, or the like. After receiving the first instruction, the tag performs the read operation, the write operation, the read/write operation, or the like in response to the first instruction.

S207: The tag sends a first response to the reader/writer. Correspondingly, the reader/writer receives the first response from the tag.

The first response is a response message of the first instruction, and indicates that the tag completes an operation, a write operation, a read/write operation, or the like.

After finishing processing on a tag, the reader/writer may further send a query reply (QueryRep) command to the tag. After receiving the QueryRep command, the tag in communication with the reader/writer toggles an inventoried flag bit, for example, sets the inventoried flag bit from B to A. The QueryRep signaling may also be used for triggering a next access opportunity, that is, performing a minus-one operation on a tag whose counter is not 0. When counter = 0, the tag may initiate next random access.

### 4. 5G QoS

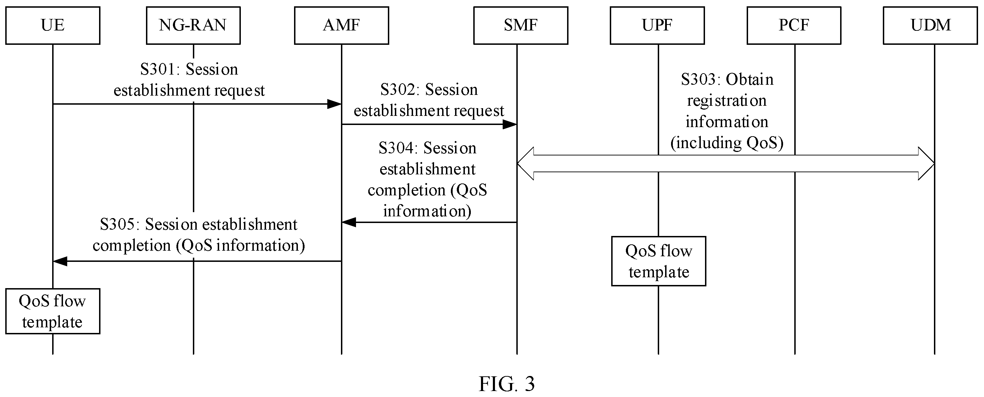

As shown in FIG. 3, QoS for each user equipment (user equipment, UE) is a QoS parameter allocated in a session establishment process after each UE accesses a network. Specifically, the UE sends a session establishment request to a session management function (session management function, SMF) through an AMF, and the SMF exchanges, after receiving the session establishment request, UE registration information with a user plane function (user plane function, UPF), a policy control function (policy control function, PCF), and unified data management (unified data management, UDM), to obtain QoS information for the UE.

After a session establishment process is completed, the UE and the UPF have a QoS flow template (QoS flow template) corresponding to a service. A QoS flow template includes a plurality of packet filters (packet filter) and a priority. The SMF may construct a QoS flow template by using a service data flow (service data flow, SDF) template. The SDF template is defined in a policy and charging control (policy and charging control, PCC) framework. The SDF template includes one or more SDF filters that can filter a service data flow.

When a downlink data packet arrives, the UPF maps the downlink data packet to a QoS flow by using a filter, then performs QoS control corresponding to the QoS flow, marks the data packet with a QoS flow identifier (QoS flow ID, QFI) in a header of an upper-layer encapsulation protocol, and then sends the data packet to an access network (radio access network, RAN) through N3 Tunnel corresponding to the QoS flow. After receiving the data packet, the RAN finds a corresponding data radio bearer (data radio bearer, DRB) and QoS parameter based on the QFI, performs QoS control, and then sends the data packet to the UE through the DRB.

When sending uplink data, the UE maps the uplink data to a QoS flow by using a filter, and then finds a corresponding DRB for sending. After receiving the data, the RAN performs QoS control based on a QFI, then finds corresponding N3 Tunnel (tunnel), and then sends the data packet to the UPF.

Each protocol data unit (protocol data unit, PDU) session has a default QoS rule (rule) without a QoS flow template. A QoS flow established according to the QoS rule is similar to a default bearer in an evolved packet system (evolved packet system, EPS) network, and data that cannot match another QoS flow is mapped to the QoS flow for transmission.

A QoS flow is a minimum 5G QoS bearer. A QoS flow is the smallest granularity for a 5G service. After a management procedure of a PDU session on a control plane ends, a user-plane channel is established, and a QoS flow carries a data packet in the user-plane channel for data transmission.

### 5G QoS framework overview:

(1) A QoS flow is the finest granularity for QoS differentiation. To be specific, a QoS parameter and a characteristic are bound to a QoS flow. The QoS parameter includes a delay, a priority, a special data representation, and the like. These parameters together determine a final priority of a QoS flow. The characteristic is similar to a data packet header. If all the foregoing parameters are written into a data packet, the data is excessively long. Therefore, a paradigm is defined and parameters of various levels are defined in advance, and only simple data is used to express various characteristics. In other words, the characteristic is a set of individual parameters.
(2) Each QoS flow is identified by a QFI, and the ID is unique in one PDU session (a same QFI is allowed in two PDU sessions).
(3) A next-generation radio access network (next-generation radio access network, NG-RAN) may establish a (data) radio bearer (bearer) based on logic in the NG-RAN, or the NG-RAN may combine a plurality of QoS flows into a same (data) radio bearer. There is no strict one-to-one relationship between a data radio bearer and a QoS flow.

After a QoS flow is determined, UE, an NG-RAN, and a UPF all know in advance information corresponding to the QoS flow. Therefore, a QFI is more important as an identifier. The QFI is carried in a general packet radio service (general packet radio service, GPRS) tunneling protocol (GPRS tunneling protocol, GTP)-user plane (user, U) encapsulation header, and is sent through an N3 (and N9) interface (that is, a segment from an AN to a UPF), where the encapsulation header is not changed in this segment of end-to-end transmission.

Data packets marked with a same QFI receive same flow forwarding processes (such as scheduling and an admission threshold). A guaranteed bit rate (guaranteed bit rate, GBR) QoS flow requires a guaranteed flow bit rate; and a non-guaranteed bit rate (non-guaranteed bit rate, NGBR) QoS flow does not require a guaranteed flow bit rate.

Based on the procedure shown in FIG. 3, the QoS parameter establishes QoS-related configuration information for each UE after the session is established. This complex process of session establishment and QoS parameter configuration for each UE is not applicable to a terminal device with ultra-low complexity (for example, a tag). Consequently, QoS-based scheduling cannot be implemented on the terminal device with low complexity.

Therefore, embodiments of this application provide a communication method, so that QoS-based scheduling can be implemented on a terminal device with low complexity.

To better understand embodiments of this application, the following descriptions are provided before embodiments of this application are described.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information may be directly indicated. For example, the to-be-indicated information or an index of the to-be-indicated information is directly indicated. Alternatively, the to-be-indicated information may be indirectly indicated by indicating other information, and there is an association relationship between the other information and the to-be-indicated information. Alternatively, only one part of the to-be-indicated information may be indicated, and the other part of the to-be-indicated information is known or pre-agreed on. For example, specific information may alternatively be indicated according to an arrangement sequence of all pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending cycles and/or sending occasions of these pieces of sub-information may be the same or may be different. A specific sending method is not limited in this application. The sending cycles and/or sending occasions of these pieces of sub-information may be predefined, for example, predefined according to a protocol; or may be configured by sending configuration information by a transmit-end device to a terminal device. The configuration information may include, for example, but not limited to, one or a combination of at least two of RRC signaling, media access control (media access control, MAC) layer signaling, and physical layer signaling. The MAC layer signaling includes, for example, a MAC-control element (control element, CE). The physical (physical, PHY) layer signaling includes, for example, downlink control information (downlink control information, DCI).

Second, "first", "second", and various numbers in embodiments of this application are merely for differentiation for ease of description, but are not intended to limit the scope of embodiments of this application, for example, for differentiation between different indication information. In another example, first indication information and second indication information are merely for differentiation between different regions, and do not limit a sequence of the first indication information and the second indication information. A person skilled in the art may understand that the terms such as "first" and "second" do not limit a quantity or an execution sequence, and the terms such as "first" and "second" do not indicate a definite difference.

Third, in embodiments of this application, descriptions such as "when", "in a case", and "if" mean that a device (for example, a terminal device or an access network device) performs corresponding processing in an objective situation, and are not intended to limit time, and the device (for example, the terminal device or the access network device) is not required to perform a determining action during implementation; and do not mean any other limitation.

In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

In addition, in embodiments of this application, "/" indicates an "or" relationship between associated objects. For example, A/B may indicate A or B. The expression "and/or" indicates an "and" association relationship or an "or" association relationship between associated objects. For example, A and/or B may indicate the following cases: Only A exists, only B exists, and both A and B exist, where A and B may be singular or plural. "At least one of the following" or a similar expression thereof indicates any combination of listed items. For example, at least one of A, B, and (or) C may indicate the following cases: Only A exists, only B exists, only C exists, both A and B exist, both B and C exist, both A and C exist, and all A, B, and C exist, where A, B, and C may be singular or plural.

Finally, network architectures and service scenarios that are described in embodiments of this application are intended to describe the technical solutions in embodiments of this application more clearly, and do not constitute any limitation on the technical solutions provided in embodiments of this application. A person of ordinary skill in the art can know that, as the network architectures evolve and new service scenarios emerge, the technical solutions provided in embodiments of this application are also applicable to similar technical problems.

The following first describes an architecture of a system in embodiments of this application.

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

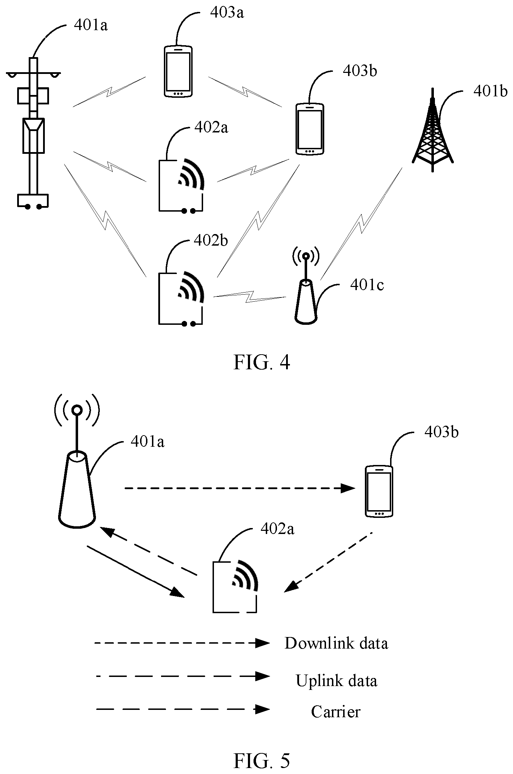

For example, FIG. 4 is a diagram of an architecture of a communication system according to an embodiment of this application. As shown in FIG. 4, the communication system includes a network device (an access network device 401a), a plurality of first-type terminals (a first-type terminal 402a and a first-type terminal 402b), and a second-type terminal (a second-type terminal 403a).

It may be understood that the communication system shown in FIG. 4 may further include another network device, for example, an access network device 401b and/or an access network device 401c; and the communication system shown in FIG. 4 may further include another second-type terminal, for example, a second-type terminal 403b. In addition, the communication system shown in FIG. 4 may further include another first-type terminal.

In the communication system provided in FIG. 4, a communication connection may be established between the access network device and the first-type terminal. For example, a communication connection may be established between the access network device 401a and the first-type terminal 402a, or between the access network device 401a and the first-type terminal 402b, or between the access network device 401c and the first-type terminal 402b.

A communication connection may also be established between the access network device and the second-type terminal. For example, a communication connection may be established between the access network device 401a and the second-type terminal 403a.

A communication connection may also be established between the first-type terminal and the second-type terminal. For example, a communication connection may be established between the first-type terminal 402a and the second-type terminal 403b, or between the first-type terminal 402b and the second-type terminal 403b.

A communication connection may also be established between different access network devices. For example, a communication connection may be established between the access network device 401b and the access network device 401c.

A communication connection may also be established between different second-type terminals. For example, a communication connection may be established between the second-type terminal 403a and the second-type terminal 403b.

The first-type terminal is a device with extremely low power consumption and/or extremely low complexity or an apparatus in a device with extremely low power consumption and/or extremely low complexity. The first-type terminal may be referred to as a terminal device in the Internet of Things, or may be referred to as an A-IoT device, an A-IoT terminal, passive A-IoT, a terminal apparatus, a terminal device, a passive (passive) tag (tag), a tag, a tag device, a passive apparatus, a passive device, a semi-active device, a battery-free terminal/device, a batteryless terminal/device, a back reflection terminal/device, a backscattering terminal (backscattering terminal), passive IoT, a reflector, a reflective terminal, a signal scattering device (ambient signal device), or the like. In the following method embodiments, an example in which the first-type terminal is a terminal apparatus is used for description.

The second-type terminal may be a terminal with a transceiver function, or may be a chip or chip system disposed in the terminal. The second-type terminal may also be referred to as UE, an access terminal, a subscriber unit (subscriber unit), a subscriber station, a mobile station (mobile station, MS), a mobile console, a remote station, a remote terminal, a mobile device, a user terminal, a terminal device, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine-type communication (machine-type communication, MTC) terminal, a computer with a wireless transceiver function, a virtual reality (virtual reality, VR) terminal, an augmented reality (augmented reality, AR) terminal, a smart home device (such as a refrigerator, a television, an air conditioner, or a meter), a smart robot, a mechanical arm, a workshop device, a wireless terminal in self driving, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an on-board terminal, a road side unit (road side unit, RSU) with a terminal function, a flight device (such as a smart robot, a hot air balloon, an unmanned aerial vehicle, or an airplane), or the like. The terminal in this application may alternatively be an on-board module, an on-board assembly, an on-board component, an on-board chip, or an on-board unit that is built in a vehicle as one or more components or units. The terminal device may alternatively be another device with a terminal function. For example, the terminal device may alternatively be a device that functions as a terminal in D2D communication.

Form factors of the second-type terminal and the first-type terminal are not limited in embodiments of this application. An apparatus configured to implement a function of the first-type terminal may be a terminal device, or may be an apparatus that can support a terminal device in implementing the function, for example, a chip system. The apparatus may be mounted in the terminal device or used in combination with the terminal device. In an embodiment of this application, the chip system may include a chip, or may include a chip and another discrete component. An apparatus configured to implement a function of the second-type terminal may be a terminal device, or may be an apparatus that can support a terminal device in implementing the function, for example, a chip system. The apparatus may be mounted in the terminal device or used in combination with the terminal device. In an embodiment of this application, the chip system may include a chip, or may include a chip and another discrete component.

The access network device, also be referred to as a RAN node, a network device, a RAN entity, an access node, or the like, may be located on a network side of the communication system, configured to help the terminal device implement wireless access, and have a device with a wireless transceiver function or a chip or chip system disposed in the device. The access network device includes but is not limited to: a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6G mobile communication system, a base station in a future mobile communication system, or an access node in a Wi-Fi system. The access network device may be a macro base station, a micro base station, an indoor base station, a relay node, a donor node, an open radio access network (open radio access network, ORAN), or a radio controller in a centralized radio access network (centralized radio access network, CRAN) scenario. Optionally, the RAN node may alternatively be a server, a wearable device, a vehicle, an on-board device, or the like. For example, the access network device in a V2X technology may be a road side unit (road side unit, RSU). All or some functions of the access network device in this application may alternatively be implemented through a software function running on hardware, or may be implemented through a virtualization function instantiated on a platform (for example, a cloud platform). The access network device in this application may alternatively be a logic node, a logic module, or software that can implement all or some functions of the access network device.

In another possible scenario, a plurality of RAN nodes coordinate to assist the terminal device in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form factor of the access network device is not limited in embodiments of this application. An apparatus configured to implement a function of the access network device may be an access network device, or may be an apparatus that can support the access network device in implementing the function, for example, a chip system. The apparatus may be mounted in the access network device or used in combination with the access network device.

In an embodiment of this application, the communication system may further include a core network element. The core network element is an apparatus that is deployed in a core network and that is configured to provide a service for the terminal device. The core network element may also be referred to as a core network device. In systems using different radio access technologies, core network elements with similar wireless communication functions may have different names. In an embodiment of this application, the core network element may be an access and mobility management network element. For example, when the method according to embodiments of this application is applied to a 5G system, the access and mobility management network element may be an AMF. When the method according to embodiments of this application is applied to an LTE system, the access and mobility management network element may be a mobility management entity (mobility management entity, MME). For ease of description only, in embodiments of this application, the foregoing apparatuses that can provide a service for the terminal device are collectively referred to as a core network element.

In addition, the communication system shown in FIG. 4 may further include another core network element, such as a session management network element, a network exposure network element, and a policy control network element. When the method according to embodiments of this application is applied to a 5G system, the session management network element may be a session management function (session management function, SMF), the network exposure network element may be a network exposure function (network exposure function, NEF), and the policy control network element may be a policy control function (policy control function, PCF). This is not limited.

It may be understood that, in FIG. 4, roles of the access network device and the second-type terminal may be relative, and the second-type terminal may be configured as an access network device. For example, the second-type terminal in FIG. 4 may be configured as a mobile base station.

In the communication system shown in FIG. 4, the access network device may be configured to implement a read/write function of a reader/writer, and the second-type terminal may be configured to assist the access network device in implementing the read/write function of the reader/writer. It may be understood that, in the communication system provided in FIG. 4, any access network device may be configured to assist another access network device in the communication system in implementing the read/write function of the reader/writer. For example, an integrated access and backhaul (integrated access and backhaul, IAB) device may be configured to assist a base station in implementing the function of the reader/writer. Alternatively, in the communication system provided in FIG. 4, any second-type terminal may be configured to assist another second-type terminal in implementing the read/write function of the reader/writer.

The following examples are described with reference to the access network device 401a, the first-type terminal 402a, and the second-type terminal 403a.

In a possible design scheme, the second-type terminal is configured to assist the access network device in sending downlink data, that is, the second-type terminal performs downlink assistance. When the second-type terminal is UE, the UE performs downlink assistance.

In this case, as shown in FIG. 5, the access network device 401a may provide a carrier for the first-type terminal 402a. The access network device 401a may further receive uplink data from the first-type terminal 402a, the access network device 401a may further send downlink data to the second-type terminal 403b, and then the second-type terminal 403b sends the downlink data to the first-type terminal 402a.

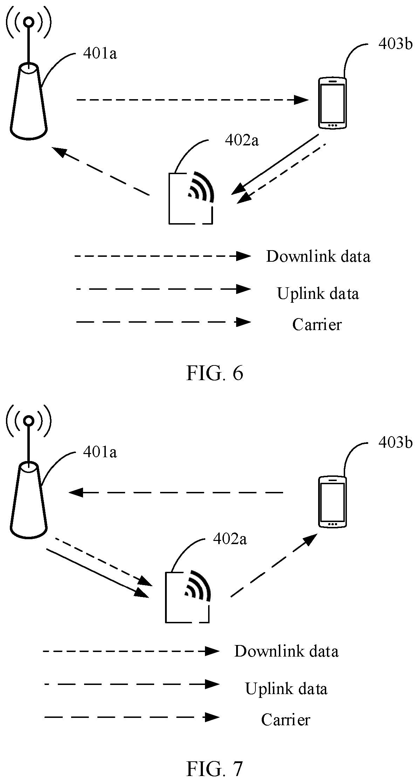

Alternatively, as shown in FIG. 6, the second-type terminal 403b device may provide a carrier for the first-type terminal 402a. The access network device 401a may receive uplink data from the first-type terminal 402a, the access network device 401a may further send downlink data to the second-type terminal 403b, and then the second-type terminal 403b sends the downlink data to the first-type terminal 402a.

In a possible design scheme, the second-type terminal 403b is configured to assist the access network device 401a in receiving uplink data, that is, the second-type terminal performs uplink assistance. When the second-type terminal is UE, the UE performs uplink assistance.

In this case, as shown in FIG. 7, the access network device 401a may provide a carrier for the first-type terminal 402a, the access network device 401a sends downlink data to the first-type terminal 402a, the first-type terminal 402a sends uplink data to the second-type terminal 403b, and then the second-type terminal 403b sends the uplink data to the access network device 401a.

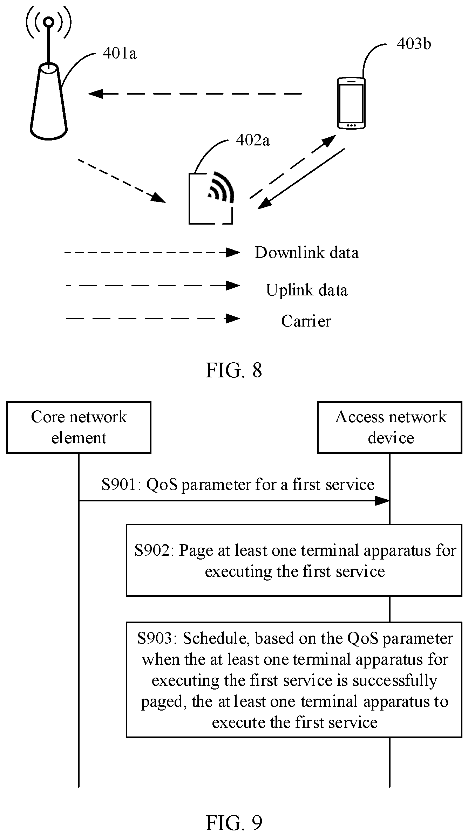

Alternatively, as shown in FIG. 8, the second-type terminal 403b may provide a carrier for the first-type terminal 402a, the access network device 401a sends downlink data to the first-type terminal 402a, the first-type terminal 402a sends uplink data to the second-type terminal 403b, and then the second-type terminal 403b sends the uplink data to the access network device 401a.

The access network device 401a may communicate with the first-type terminal 402a through a Uu interface, the access network device 401a may communicate with the second-type terminal 403b through a Uu interface, and the second-type terminal 403b may communicate with the first-type terminal 402a through a sidelink (sidelink).

The following describes in detail the communication method provided in embodiments of this application with reference to FIG. 9 to FIG. 12.

For example, FIG. 9 is a schematic flowchart of a communication method according to an embodiment of this application. An action of an access network device in the method may be further performed by an apparatus/module in the access network device, for example, a chip, a processor, or a processing unit in the access network device. An action of a core network element in the method may be further performed by an apparatus/module in the core network element, for example, a chip, a processor, or a processing unit in the core network element. This is not specifically limited in embodiments of this application. In addition, steps performed by a single execution body in the method may alternatively be performed by a plurality of execution bodies, and these execution bodies may be logically and/or physically separated.

As shown in FIG. 9, the communication method includes the following steps.

S901: The core network element sends a QoS parameter for a first service to the access network device. Correspondingly, the access network device receives the QoS parameter for the first service from the core network element.

In an embodiment of this application, the QoS parameter is configured at the granularity of a service, one QoS parameter corresponds to one service, the QoS parameter for the first service is for the access network device to schedule a terminal apparatus for executing the first service, and the QoS parameter for the first service may support at least one terminal apparatus in executing the first service. The terminal apparatus is the first-type terminal shown in FIG. 4, for example, a tag. The first service is a service that can be supported by the terminal apparatus. The first service may be a service of one type or may be one service. For example, the first service may be an inventory service, a sensing service, a read service, a write service, or a deactivation service. The service in embodiments of this application may also be referred to as an A-IoT service. It should be understood that the QoS parameter may be used for indicating a quality of service requirement for at least one terminal apparatus to complete a service, or may be used for ensuring quality of service of the first service.

The QoS parameter for the first service includes a data transmission delay requirement for executing or completing the first service. The data transmission delay requirement may mean (or represent or indicate) a delay requirement for one or more terminal apparatuses for executing the first service to complete collection and reporting of service data, or may mean a delay requirement for the access network device to receive all service data reported by one or more terminal apparatuses for executing the first service, or may mean a delay requirement for the access network device to transmit, to a core network element or a server, all obtained service data reported by one or more terminal apparatuses for executing the first service. This is not limited. For starting time for executing the first service, time counting may be started from delivery of first service trigger signaling (for example, the following first indication information) by a core network or an application layer, or time counting may be started from reception of first service trigger signaling by the access network device. End time is shown in the foregoing example. This is not limited. For example, transmitted service data may be identification information of the terminal apparatus.

If the data transmission delay requirement is a delay requirement for the access network device to transmit, to the core network, all obtained service data reported by one or more terminal apparatuses for executing the first service, the data transmission delay requirement includes a service data transmission delay requirement between the access network device and the one or more terminal apparatuses for executing the first service, and a service data transmission delay requirement between the access network device and the core network. It should be understood that the core network element to which data is finally reported may be a core network element that sends the QoS parameter for the first service, or may be another network element in another core network. This is not limited.

In addition to the delay requirement, the QoS parameter for the first service may further include a priority of the first service, a reliability requirement for transmitting the first service, and/or the like. The priority of the first service may be an execution priority of the first service, and indicates a ranking of the first service for execution when there are a plurality of services. The reliability requirement for transmitting the first service may be a reliability requirement for transmitting service data of the first service, for example, a requirement for a bit error rate, jitter, or a packet loss rate during transmission.

In an embodiment of this application, the core network element may be an access and mobility management network element, and the access and mobility management network element may be an AMF in 5G. In a possible design scheme, the access and mobility management network element may send the QoS parameter for the first service to the access network device based on triggering by a network exposure network element or a session management network element. The network exposure network element may be an NEF in 5G, and the session management network element may be an SMF in 5G.

For example, the network exposure network element or the session management network element sends a second message to the access and mobility management network element. Correspondingly, the access and mobility management network element may receive the second message from the network exposure network element or the session management network element. The second message is for requesting execution of the first service, and the second message may include at least one of a service identifier of the first service, a service mode of the first service, and a service type of the first service. The service identifier is for identifying a service, and may also be referred to as a transaction identifier (transaction ID). The service mode may include an inventory mode, a read mode, a write mode, or the like. Optionally, the second message may further include geographical area information, information (such as a mask or filtering information) for selecting a terminal apparatus for executing the first service, and the like. The geographical area information indicates an area range in which the first service can be executed or an area range in which the first service is required to be executed, and may be for selecting a terminal apparatus in a specified area to execute the first service.

Further, the access and mobility management network element sends a third message to a policy control network element based on the second message. Correspondingly, the policy control network element receives the third message from the access and mobility management network element. The third message is for requesting to obtain QoS policy information of the first service, and the third message includes a service identifier of the first service. Therefore, the policy control network element sends the QoS policy information to the access and mobility management network element based on the third message. Correspondingly, the access and mobility management network element receives the QoS policy information from the policy control network element. The QoS policy information includes the QoS parameter for the first service, a service processing rule of the access network device, and the like. The service processing rule may be how the access network device completes scheduling of the first service based on the QoS parameter for the first service. Therefore, the access and mobility management network element may send the QoS parameter for the first service to the access network device. In an embodiment of this application, the policy control network element may be a PCF in 5G.

It should be understood that the "first message", "second message", "third message", and the like in embodiments of this application may be message names defined in an existing protocol, or may be other message names. For example, the third message may be a QoS request message. This is not limited.

S902: The access network device pages at least one terminal apparatus for executing the first service.

After obtaining the QoS parameter for the first service, the access network device may page at least one terminal apparatus for executing the first service. For example, the access network device may send a paging message. The paging message is for paging at least one terminal apparatus to access a network to execute the first service. In an embodiment of this application, a paging process may be considered as a message for triggering random access of the terminal apparatus, and the terminal apparatus that performs random access supports the first service. For a specific implementation process of paging the terminal apparatus, refer to the related descriptions of the random access process shown in FIG. 2. Details are not described herein again. In an embodiment of this application, the access network device may specify a related transmission or scheduling policy based on the QoS parameter, and the access network device may also consider the QoS parameter in a process of paging the at least one terminal apparatus for executing the first service, for example, determine, based on the QoS parameter, a configuration of the paged terminal apparatus.

In a possible design scheme, the access network device may receive first indication information from the core network element, and page, based on the first indication information, the at least one terminal apparatus for executing the first service. The first indication information indicates that the first service needs to be executed, or the first indication information indicates that at least one terminal apparatus may be selected to execute the first service. In other words, the access network device may page, based on triggering by the core network element, the terminal apparatus for executing the first service.

In a possible implementation, the access network device may receive fifth indication information from the core network element, and the fifth indication information may indicate a type of the first service or a transmission type of the first service. The transmission type may indicate a data transmission status, for example, transmission of a plurality of pieces of data or transmission of only a single piece of data. Specifically, in a case that the terminal apparatus performs transmission of a plurality of pieces of data, for example, the terminal apparatus completes N (N is a positive integer) pairs of uplink and downlink transmission, or in a case that the terminal apparatus performs transmission of a single piece of data, for example, uploads only one piece of uplink data, the access network device may send release to the terminal apparatus (optionally, may send a reception acknowledgment indication to the terminal before the release). When receiving a service type, the access network device needs to wait, until a release indication is received from the core network, before releasing the terminal apparatus, or releases the terminal apparatus after a period of no data transmission.

In a possible implementation, the first indication information and the QoS parameter may be carried in a same message. In other words, the first indication information and the QoS parameter may be sent together, to reduce signaling overheads.

In a possible implementation, at least two of the first indication information, the QoS parameter, and the fifth indication information may be carried in a same message.

In an embodiment of this application, the first service may be triggered by the core network, or may be triggered by an application server or an application layer through the core network.

S903: The access network device schedules, based on the QoS parameter when the at least one terminal apparatus for executing the first service is paged, the at least one terminal apparatus to execute the first service.

In an embodiment of this application, scheduling the at least one terminal apparatus to execute the first service may be replaced with formulating a transmission policy, determining a scheduling policy, or the like.

After determining the at least one terminal apparatus that supports the first service, the access network device may determine a scheduling policy based on the QoS parameter for the first service. The scheduling policy may include selecting which terminal apparatus to execute the first service, allocating which resource to a selected terminal apparatus, a bandwidth, using which encoding manner, a modulation order, a quantity of transmission repetitions, and the like. This is not limited. Selecting which terminal apparatus to execute the first service may include selecting a quantity, a location, and the like of terminal apparatuses for executing the first service. It should be understood that the location of the terminal apparatus may be a relative location, for example, location information relative to the access network device, or may be a specific geographical location.

For example, the QoS parameter for the first service includes a data transmission delay requirement for executing the first service, the first service is an inventory service, and the delay requirement is 100 milliseconds (millisecond, ms). The access network device is required to complete, within 100 ms, collection of application layer identifiers of all terminal apparatuses for executing the inventory service, and send the collected application layer identifiers to the core network or the server. Therefore, the access network device may determine, based on the data transmission delay requirement with factors such as a total quantity of paged terminal apparatuses and a distance between each terminal apparatus and the access network, which terminal apparatus in the paged terminal apparatuses can be supported within the data transmission delay to execute the inventory service, and allocate a data transmission resource to the selected terminal apparatus, to indicate the selected terminal apparatus to report the application layer identifier.

In a case that a plurality of services need to be executed, the access network device may determine, based on the priority of the first service, whether the priority of the first service is higher than that of any service other than the first service in the plurality of services. If the priority of the first service is higher than that of any service other than the first service in the plurality of services, the terminal apparatus is scheduled to preferentially execute the first service. If the priority of the first service is not higher than that of any service other than the first service in the plurality of services, the terminal apparatus is scheduled to execute the first service according to a priority sequence of the plurality of services.

It should be understood that, when there are a plurality of QoS parameters for the first service, the access network device may schedule the terminal apparatus based on the plurality of QoS parameters to execute the first service, or may schedule the terminal apparatus based on some of the QoS parameters to execute the first service. This is not limited.

After the access network device schedules, based on the QoS parameter for the first service, the terminal apparatus for executing the first service, or after the access network device obtains the service data reported by the terminal apparatus, in a possible design scheme, the access network device may send second indication information to the core network element. Correspondingly, the core network element receives the second indication information from the access network device. The second indication information indicates that the first service is executed by the terminal apparatus. In other words, after scheduling of the first service is completed, the access network device may notify the core network element of an execution status of the first service, for example, whether to start execution, a quantity of terminal apparatuses for executing the first service, and a service data reporting status.

It should be understood that, in some cases, the second indication information may alternatively indicate that the first service is not executed or cannot be executed. For example, the first service has not been executed because the priority of the first service is lower, or the first service cannot be executed due to a limited resource. Optionally, the second indication information may alternatively indicate a reason why the first service is not executed or cannot be executed.

In a possible case, the access network device may further send third indication information to the core network element. Correspondingly, the core network element receives the third indication information from the access network device. The third indication information indicates that scheduling of the first service is stopped, or data transmission of the first service is stopped, or transmission of the first service is stopped. That scheduling of the first service is stopped may mean that the access network device stops allocating a scheduling resource to the terminal apparatus to execute the first service. That data transmission of the first service is stopped or transmission of the first service is stopped may mean that the access network device stops receiving service data sent by the terminal apparatus, or stops sending service data of the first service to the terminal apparatus, or stops any uplink/downlink signal or data for supporting transmission of the first service; or may mean that the access network device stops receiving service data sent by the terminal apparatus and stops transmitting service data of the first service to the core network. This is not limited.

In a possible implementation, the third indication information may include a reason for stopping the scheduling of the first service or a reason for stopping the data transmission of the first service. For example, current data transmission does not meet a QoS requirement (such as a delay requirement or a reliability requirement), a resource is limited, overload (excessive load) occurs, or collection and transmission of service data of all scheduled terminal apparatuses have been completed.

In another possible case, the core network element may send fourth indication information to the access network device. Correspondingly, the access network device receives the fourth indication information from the core network element. The fourth indication information indicates the access network device to stop data transmission of the first service, and the fourth indication information may include a service identifier of the first service. Optionally, the fourth indication information may further include a reason for stopping data transmission of the first service. Optionally, the fourth indication information may also indicate time to stop transmission, that is, remaining duration before stopping data transmission of the first service. For example, after receiving the fourth indication information, the access network device may stop transmitting service data of the first service to the core network, or may indicate the terminal apparatus to stop data transmission of the first service, for example, send indication information to the terminal apparatus to stop transmission or release a connected state, or may stop sending any signal or carrier to the terminal apparatus.

Optionally, after receiving the fourth indication information, the access network device may further send received data to the core network. To be specific, after receiving the fourth indication information, if there is still collected data that is not sent, the access network device continues to send the collected data to the core network until all the collected data is sent. For example, when sending the fourth indication information, the core network element may indicate whether collected data that has not been transmitted to the core network needs to be sent to the core network.

In a possible implementation, if the QoS parameter is a delay requirement (for example, time for completing an instruction or service), and the access network device has not received response signaling or a completion indication from a first terminal apparatus or the core network within the indicated time, the access network device may also re-trigger the first service, that is, re-send service trigger signaling, to indicate the first terminal apparatus to re-execute collection and transmission operations of the service.

It should be understood that the access network device or the core network element does not rely on the QoS parameter to send the foregoing stop or start indication, and may dynamically perform the indication based on an actual situation (such as a resource status or an overload status).

Based on the communication method shown in FIG. 9, the access network device obtains, from the core network element, a QoS parameter for each service (a service-level OoS parameter), for example, the QoS parameter for the first service, and may schedule, based on the QoS parameter for the first service, the at least one paged terminal apparatus to execute the first service. This requires no configuration of a QoS parameter for each terminal apparatus, simplifying a QoS parameter processing procedure between a terminal apparatus and a network, and reducing signaling overheads, so that QoS-based flexible scheduling can be implemented on the terminal apparatus (for example, a terminal device with low complexity).

It should be noted that, in an embodiment of this application, the QoS parameter may also be referred to as a QoS rule, a QoS requirement, a QoS service, QoS information, or the like. This is not limited.

The following describes in detail the communication method shown in FIG. 9 with reference to 5GS. For example, the core network element is an AMF, the access network device is a gNB, and the terminal apparatus is a tag.

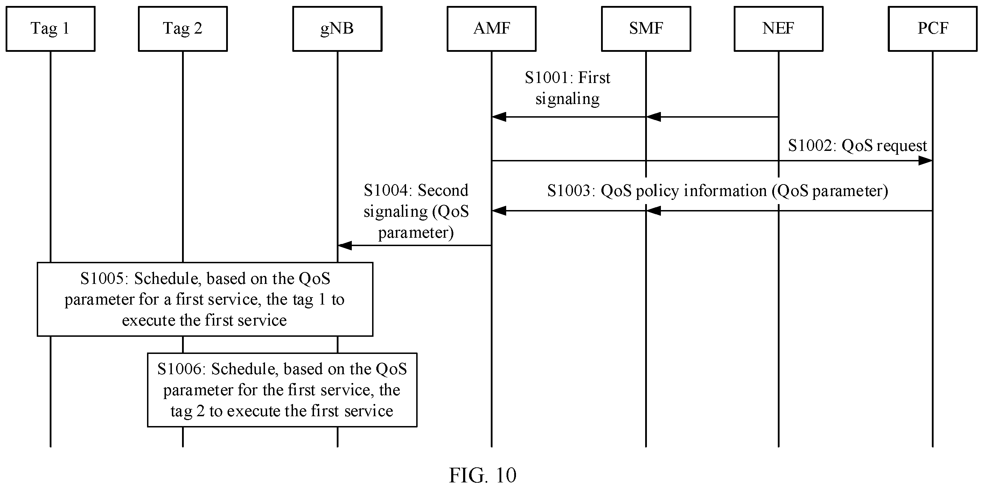

For example, FIG. 10 is a schematic flowchart of a communication method according to an embodiment of this application. As shown in FIG. 10, the communication method includes the following steps.

S1001: An NEF sends first signaling to an AMF. Correspondingly, the AMF receives the first signaling from the NEF.

For specific descriptions of the first signaling, refer to the related descriptions of the second message in S901. Details are not described herein again.

It should be understood that the NEF may send the first signaling to the AMF by using an SMF.

S1002: The AMF sends a QoS request to a PCF. Correspondingly, the PCF receives the QoS request from the AMF.

For specific descriptions of the QoS request, refer to the related descriptions of the third message in S901. Details are not described herein again.

It should be understood that the AMF may send the QoS request to the PCF by using the SMF.

S1003: The PCF sends QoS policy information to the AMF. Correspondingly, the AMF receives the QoS policy information from the PCF.

For specific descriptions of the QoS policy information, refer to the related descriptions of the QoS policy information in S901. Details are not described herein again.

It should be understood that the PCF may send the QoS policy information to the AMF by using the SMF.

S1004: The AMF sends second signaling to a gNB. Correspondingly, the gNB receives the second signaling from the AMF.

The second signaling may include a QoS parameter for a first service and first indication information. For the QoS parameter for the first service, refer to the related descriptions in S901. For the first indication information, refer to the related descriptions in S902. Details are not described herein again.

S1005: The gNB schedules, based on the QoS parameter for the first service, a tag 1 to execute the first service.

S1006: The gNB schedules, based on the QoS parameter for the first service, a tag 2 to execute the first service.

For scheduling processes of S1005 and S1006, refer to the related descriptions in S903. Details are not described herein again.

FIG. 9 and FIG. 10 show the process in which the network side triggers service execution (downlink triggering) before the terminal apparatus accesses the network, and the access network device implements scheduling of the terminal apparatus based on the obtained service-level QoS parameter. An embodiment of this application further provides a communication method, so that an access network device can implement a process of scheduling a terminal apparatus according to an obtained service-level QoS parameter based on triggering by the terminal apparatus.

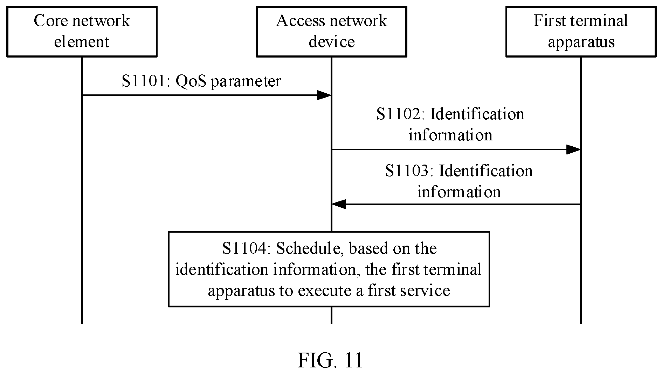

For example, FIG. 11 is a schematic flowchart of a communication method according to an embodiment of this application. An action of an access network device in the method may be further performed by an apparatus/module in the access network device, for example, a chip, a processor, or a processing unit in the access network device. An action of a first terminal apparatus in the method may be further performed by an apparatus/module in the first terminal apparatus, for example, a chip, a processor, or a processing unit in the first terminal apparatus. This is not specifically limited in embodiments of this application. In addition, steps performed by a single execution body in the method may alternatively be performed by a plurality of execution bodies, and these execution bodies may be logically and/or physically separated.

As shown in FIG. 11, the communication method includes the following steps.

S1101: A core network element sends a QoS parameter to an access network device. Correspondingly, the access network device receives the QoS parameter from the core network element.

The QoS parameter may be a service-level QoS parameter for each terminal apparatus (for example, a first terminal apparatus), and supports one terminal apparatus in executing a service (for example, a first service). In this case, the QoS parameter may be referred to as a QoS parameter that is for the first terminal apparatus and that supports the first service. The QoS parameter may include at least one of the following: a priority of the first service, a data transmission delay requirement for executing the first service, and a reliability requirement for transmitting the first service. It should be understood that the QoS parameter is configured for each terminal apparatus, and the data transmission delay requirement for executing the first service and the reliability requirement for transmitting the first service are also for one terminal apparatus. For details, refer to the related descriptions in S901. Details are not described herein again. In an embodiment of this application, the terminal apparatus is the first-type terminal shown in FIG. 4. A specific priority may mean that services of a same type have different priorities, or different service types correspond to different priorities. For example, an inventory service 1 has a priority higher than an inventory service 2, and the inventory service 1 is higher than a read service 1. In other words, the QoS parameter may be bound to a service type, or there may be a plurality of QoS parameter configurations in a same service type.

In a possible case, the QoS parameter may be a QoS parameter for each service, and may support at least one terminal apparatus in executing the service (for example, the first service). The at least one terminal apparatus includes the first terminal apparatus. In this case, the QoS parameter may be referred to as a QoS parameter for the first service. It may be understood that the QoS parameter includes a QoS parameter corresponding to at least one terminal apparatus that supports the first service. In this case, for specific descriptions of the QoS parameter, refer to the related descriptions in S901. Details are not described herein again.

In an embodiment of this application, the core network element may be an access and mobility management network element or a session management network element. The access and mobility management network element may be an AMF in 5G, and the session management network element may be an SMF in 5G.

In a possible design scheme, the access and mobility management network element or the session management network element may determine, based on the QoS parameter supported by the first terminal apparatus, the QoS parameter (for transmission by the first terminal apparatus) to be sent to the access network device. The QoS parameter supported by the first terminal apparatus may be reported to the access and mobility management network element or the session management network element in a registration initiation process after the first terminal apparatus completes initial random access. For example, the QoS parameter supported by the first terminal apparatus is carried in a registration request. It should be understood that the registration request further includes an identifier of the first terminal apparatus and related registration information. Alternatively, the access and mobility management network element or the session management network element may request the QoS parameter from a policy control network element based on the QoS parameter supported by the first terminal apparatus. In a possible case, when the core network element is a session management network element, the QoS parameter supported by the first terminal apparatus may be forwarded to the session management network element by using an access and mobility management network element.

In a possible design scheme, the access and mobility management network element or the session management network element may obtain the QoS parameter from the policy control network element, where the policy control network element may be a PCF in 5G. For example, the session management network element sends a QoS request to the policy control network element. Correspondingly, the policy control network element receives the QoS request from the session management network element. The QoS request may include a service identifier of the first service and/or an identifier of the first terminal apparatus. Further, the policy control network element sends the QoS parameter to the session management network element. Correspondingly, the session management network element receives the QoS parameter from the policy control network element. In a possible case, when the core network element is an access and mobility management network element, the QoS parameter may be forwarded to the access and mobility management network element by using a session management network element.

S1102: The access network device sends identification information to the first terminal apparatus. Correspondingly, the first terminal apparatus receives the identification information from the access network device.

After receiving the QoS parameter, the access network device may allocate one piece of identification information to the QoS parameter. The identification information is for identifying the QoS parameter. For example, the identification information may be an identifier of the first terminal apparatus, such as an EPC, an inactive (inactive) radio network temporary identifier (radio network temporary identifier, RNTI) (I-RNTI for short), or another RNTI, or may be a QoS identifier, such as a 5G QoS identifier (5G QoS identifier, 5QI) or a 4G QoS class identifier (QoS class identifier, QCI), or may be a context identifier of the first terminal apparatus or another newly allocated identifier (new ID). This is not limited.

In a possible design scheme, the access network device may send the identification information in a process in which the first terminal apparatus initiates registration. For example, the access network device sends a registration accept message to the first terminal apparatus. Correspondingly, the first terminal apparatus receives the registration accept message from the access network device. The registration accept message indicates completion of the registration, and the registration accept message includes the identification information.

In another possible design scheme, the access network device may send the identification information in a data transmission process with the first terminal apparatus after the first terminal apparatus completes initial random access. For example, in a process of data transmission between the first terminal apparatus and the access network device, the access network device may send a first message to the first terminal apparatus. The first message includes the identification information, and the first message may be an RRC message, such as an RRC release (release) message or an RRC reconfiguration (reconfiguration) message.

Further, the first terminal apparatus may store the obtained identification information. The first terminal apparatus also stores the identification information when entering an idle state or an inactive state, to facilitate performing the following S1103 and S1104.

In an embodiment of this application, when the first terminal apparatus is released to an inactive state, or reselection occurs, or a cell handover to another access network device occurs, the access network device still retains context of the first terminal apparatus and a corresponding context identifier. The context of the first terminal apparatus includes the QoS parameter. Therefore, when the first terminal apparatus accesses the network again, a procedure of obtaining the QoS parameter can be reduced, and a rate of scheduling the first terminal apparatus by the access network device to execute the first service can be increased.

In a possible scenario, the core network element may allocate identification information to the first terminal apparatus, and the identification information is forwarded to the first terminal apparatus by using the access network device.

S1103: The first terminal apparatus sends the identification information to the access network device. Correspondingly, the access network device receives the identification information from the first terminal apparatus.

In a possible design scheme, the first terminal apparatus is in a connected state, and execution of the first service needs to be triggered. In this case, in a process of data transmission between the first terminal apparatus and the access network device, the first terminal apparatus may send an RRC message to the access network device. The RRC message carries identification information. The identification information may be for the access network device to determine stored context information of the first terminal apparatus, for example, the supported QoS parameter or the QoS parameter corresponding to the first service. In addition, in this case, the first terminal apparatus may be in a connected state after completion of initial access, or may be in a connected state after completion of re-access. This is not limited.

In a possible design scheme, the first terminal apparatus is in a non-connected state, and execution of the first service needs to be triggered. In this case, in a process in which the first terminal apparatus initiates random access again, the first terminal apparatus may send identification information to the access network device. For example, the identification information may be carried in Msg3 for sending, or may be carried in another uplink message in the random access process for sending, to indicate that the first terminal apparatus needs to execute the first service. After completing the access, the first terminal apparatus performs the following S1104.

S1104: The access network device schedules, based on the identification information, the first terminal apparatus to execute the first service.

After receiving the identification information, the access network device determines the corresponding QoS parameter based on the identification information, and then schedules, based on the QoS parameter, the first terminal apparatus to execute the first service, for example, allocates a resource to the first terminal apparatus to execute the first service. For example, if the delay requirement for executing the first service that is included in the QoS parameter is 10 ms, which is short, a large quantity of resources may be allocated to the first terminal apparatus to transmit service data of the first service. If the delay requirement for executing the first service that is included in the QoS parameter is 50 ms, which is long, a small quantity of resources may be allocated to the first terminal apparatus to transmit service data of the first service.

When the identification information is an identifier of the first terminal apparatus or a context identifier of the first terminal apparatus, if the first terminal apparatus supports a plurality of services, based on the identification information, the access network device may be unable to determine a specific service to be executed and a QoS parameter corresponding to the service. In this case, the access network device may schedule, based on a configured default QoS parameter, the first terminal apparatus to execute the first service.

Based on the communication method shown in FIG. 11, after obtaining, from a core network, the QoS parameter for the first terminal apparatus that supports the first service, the access network device may allocate, to the first terminal apparatus, the identification information for identifying the QoS parameter, so that when the first terminal apparatus needs to execute the first service, the access network device may determine the corresponding QoS parameter based on the identification information reported by the first terminal apparatus. This simplifies a QoS obtaining procedure, requires no complete QoS negotiation and determining procedure with both the access network and the core network each time the first terminal apparatus initiates a service, and can simply determine the corresponding QoS parameter based on the identification information, implementing flexible scheduling of the first terminal apparatus (for example, a terminal device with low complexity) to execute the first service.

The following describes in detail the communication method shown in FIG. 11 with reference to 5GS. For example, the core network element is an SMF, the access network device is a gNB, and the terminal apparatus is a tag.

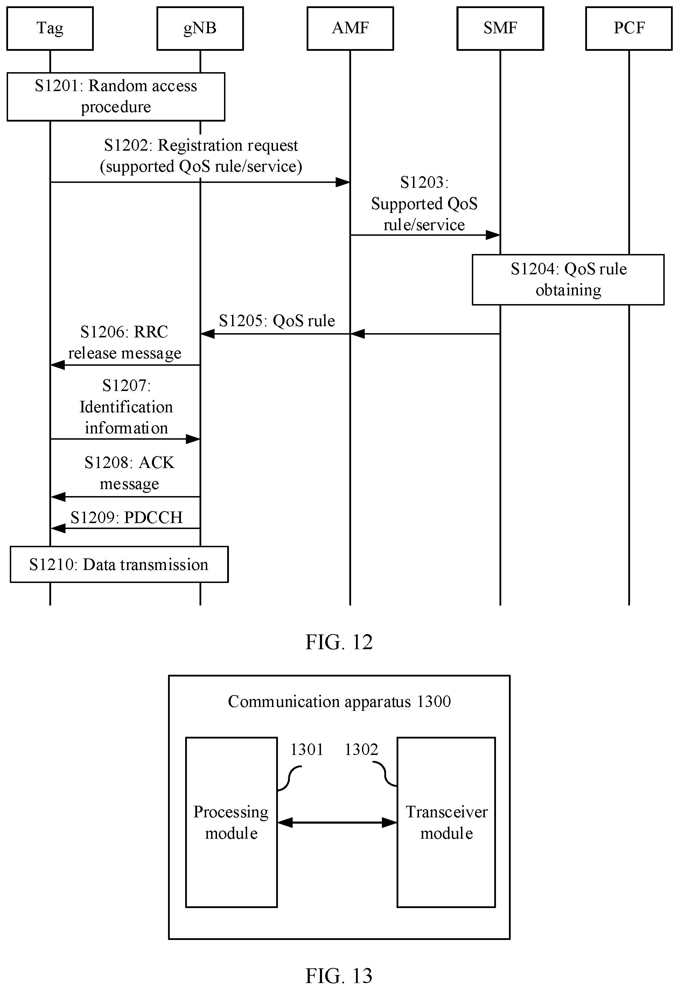

For example, FIG. 12 is a schematic flowchart of a communication method according to an embodiment of this application. As shown in FIG. 12, the communication method includes the following steps.

S1201: A tag initiates a random access procedure to a gNB.

For a random access process between the tag and the gNB, refer to the related descriptions of the procedure shown in FIG. 2. Details are not described herein again.

S1202: The tag sends a registration request to an AMF. Correspondingly, the AMF receives the registration request from the tag.

The registration request includes an identifier of the tag and related registration information. For a specific registration process, refer to the related descriptions in an existing implementation. Details are not described herein again. Optionally, the registration request may include a QoS rule (rule) or service (service) supported by the tag, and the QoS rule or service is equivalent to a QoS parameter. It should be understood that the QoS rule or service supported by the tag is usually service-level, and the tag may send the registration request to the AMF by using the gNB.

S1203: The AMF sends the QoS rule or service supported by the tag to an SMF. Correspondingly, the SMF receives the QoS rule or service supported by the tag from the AMF.

It should be understood that S1203 is an optional step. When the registration request does not include the QoS rule or service, S1203 may be skipped.

S1204: The QoS rule is obtained between the SMF and a PCF.

For example, the SMF sends a QoS request to the PCF. Correspondingly, the PCF receives the QoS request from the SMF. The QoS request is for requesting to obtain the QoS rule supported by the tag. When the tag initiates registration, the SMF may request the PCF to provide the QoS rule. Further, the PCF sends the QoS rule to the SMF. Correspondingly, the SMF receives the QoS rule from the PCF.

S1205: The SMF sends the QoS rule to the gNB. Correspondingly, the gNB receives the QoS rule from the SMF.

For specific descriptions of S1202 to S1205, refer to the related descriptions in S1101. Details are not described herein again. The SMF may send the QoS rule to the gNB by using the AMF.

S1206: The gNB sends an RRC release (release) message to the tag. Correspondingly, the tag receives the RRC release message from the gNB.

The RRC release message carries identification information, and the identification information is for identifying the QoS rule. For a specific implementation process of S1207, refer to the related descriptions in S1102. Details are not described herein again.

S1207: The tag sends the identification information to the gNB. Correspondingly, the gNB receives the identification information from the tag.

In a process in which the tag initiates random access again, the tag sends the identification information to the gNB. The identification information may be carried in any uplink message, for example, Msg3, in the random access process for sending, to indicate a service that needs to be executed.

S1208: The gNB sends an ACK message to the tag. Correspondingly, the tag receives the ACK message from the gNB.

In this case, the tag has completed random access and accessed the gNB again.

S1209: The gNB sends a physical downlink control channel (physical downlink control channel, PDCCH) to the tag. Correspondingly, the tag receives the PDCCH from the gNB.

The PDCCH carries scheduling and other control information, such as a transmission format, resource allocation, uplink scheduling permission, power control, and uplink retransmission information. After the tag accesses the network, the gNB may determine the corresponding QoS rule based on the identification information reported in S1208, schedule a service for the tag according to the QoS rule, and send the service to the tag through the PDCCH.

S1210: Data transmission is performed between the gNB and the tag.

After receiving the PDCCH, the tag implements data transmission of the service based on the scheduling information and related control information in the PDCCH.

According to the communication method shown in FIG. 11 and FIG. 12, when an uplink (mobile original, MO) service is triggered, the access network device can perform corresponding scheduling processing based on a QoS requirement for the terminal apparatus or for a service transmitted by the terminal apparatus.

It may be understood that, in the foregoing embodiments, the methods and/or steps implemented by the access network device may alternatively be implemented by a component (such as a processor, a chip, a chip system, a circuit, a logic module, or software) that can be used in the access network device; and the methods and/or steps implemented by the first terminal apparatus may alternatively be implemented by a component (such as a processor, a chip, a chip system, a circuit, a logic module, or software) that can be used in the first terminal apparatus.

The foregoing mainly describes the solutions provided in this application. Correspondingly, this application further provides a communication apparatus. The communication apparatus is configured to implement various methods in the foregoing method embodiments. The communication apparatus may be the access network device in the foregoing method embodiments, or an apparatus including the access network device, or a component that can be used in the access network device, for example, a chip or a chip system. Alternatively, the communication apparatus may be the first terminal apparatus in the foregoing method embodiments, or an apparatus including the first terminal apparatus, or a component that can be used in the first terminal apparatus, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

For example, the communication apparatus is the access network device or the terminal apparatus in the foregoing method embodiments. FIG. 13 is a diagram of a structure of a communication apparatus according to an embodiment of this application. As shown in FIG. 13, the communication apparatus 1300 includes a processing module 1301 and a transceiver module 1302. The processing module 1301 is configured to perform a processing function of the access network device or the terminal apparatus in the foregoing method embodiments. The transceiver module 1302 is configured to perform a transceiver function of the access network device or the terminal apparatus in the foregoing method embodiments.

All related content of the steps in the foregoing method embodiments may be cited in function descriptions of the corresponding functional modules. Details are not described herein again.

The communication apparatus 1300 provided in this embodiment may perform the foregoing methods. Therefore, for technical effects that can be achieved by the communication apparatus 1300, refer to the foregoing method embodiments. Details are not described herein again.

In a possible design scheme, in an embodiment of this application, the transceiver module 1302 may include a receiving module and a sending module (not shown in FIG. 13). The transceiver module is configured to implement a sending function and a receiving function of the communication apparatus 1300.

In a possible design scheme, the communication apparatus 1300 may further include a storage module (not shown in FIG. 13), and the storage module stores a program or instructions. When the processing module 1301 executes the program or instructions, the communication apparatus 1300 may perform a function of the access network device or the terminal apparatus in the method shown in any one of FIG. 9 to FIG. 12.

It should be understood that the processing module 1301 in the communication apparatus 1300 may be implemented by a processor or a processor-related circuit component, and may be a processor or a processing unit. The transceiver module 1302 may be implemented by a transceiver or a transceiver-related circuit component, and may be a transceiver or a transceiver unit.

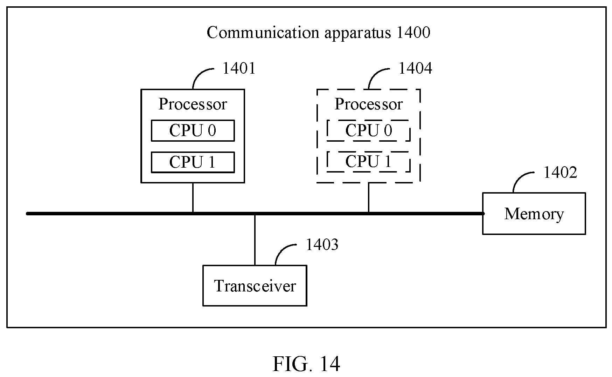

For example, FIG. 14 is a diagram of a structure of another communication apparatus according to an embodiment of this application. The communication apparatus may be an access network device or a terminal apparatus, or may be a chip (system) or another part or component that may be disposed in an access network device or a terminal apparatus. As shown in FIG. 14, the communication apparatus 1400 may include a processor 1401. In a possible design scheme, the communication apparatus 1400 may further include a memory 1402 and/or a transceiver 1403. The processor 1401 is coupled to the memory 1402 and the transceiver 1403, for example, may be connected to the memory 1402 and the transceiver 1403 through a communication bus.

The following specifically describes the components of the communication apparatus 1400 with reference to FIG. 14.

The processor 1401 is a control center of the communication apparatus 1400, and may be one processor, or may be a general term of a plurality of processing elements. For example, the processor 1401 is one or more central processing units (central processing unit, CPU), or may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

In a possible design scheme, the processor 1401 may perform various functions of the communication apparatus 1400 by running or executing a software program stored in the memory 1402 and calling data stored in the memory 1402.

During specific implementation, in an embodiment, the processor 1401 may include one or more CPUs, for example, a CPU 0 and a CPU 1 in FIG. 14.

During specific implementation, in an embodiment, the communication apparatus 1400 may include a plurality of processors, for example, the processor 1401 and a processor 1404 shown in FIG. 14. Each of these processors may be a single-core processor (single-CPU), or may be a multi-core processor (multi-CPU). The processor herein may be one or more devices, circuits, and/or processing cores configured to process data (for example, computer program instructions).

The memory 1402 is configured to store a software program for performing the solutions in this application, and the processor 1401 controls execution of the software program. For a specific implementation, refer to the foregoing method embodiments. Details are not described herein again.

In a possible design scheme, the memory 1402 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1402 may be integrated with the processor 1401, or may exist independently and be coupled to the processor 1401 through an interface circuit (not shown in FIG. 14) of the communication apparatus 1400. This is not specifically limited in embodiments of this application.

The transceiver 1403 is configured to communicate with another communication apparatus. For example, the communication apparatus 1400 is a terminal device, and the transceiver 1403 may be configured to communicate with a network device or communicate with another terminal device. In another example, the communication apparatus 1400 is a network device, and the transceiver 1403 may be configured to communicate with a terminal device or communicate with another network device.

In a possible design scheme, the transceiver 1403 may include a receiver and a transmitter (not separately shown in FIG. 14). The receiver is configured to implement a receiving function, and the transmitter is configured to implement a sending function.

In a possible design scheme, the transceiver 1403 may be integrated with the processor 1401, or may exist independently and be coupled to the processor 1401 through an interface circuit (not shown in FIG. 14) of the communication apparatus 1400. This is not specifically limited in embodiments of this application.

It should be noted that the structure of the communication apparatus 1400 shown in FIG. 14 does not constitute a limitation on the communication apparatus. An actual communication apparatus may include more or fewer components than those shown in the figure, combine some components, or have different component arrangements.

In addition, for technical effects of the communication apparatus 1400, refer to the technical effects of the method in the foregoing method embodiments. Details are not described herein again.

An embodiment of this application further provides a computer-readable storage medium storing a computer program or instructions. When the computer program or instructions are executed by a computer, functions in the foregoing method embodiments are implemented.

An embodiment of this application further provides a computer program product. When the computer program product is executed by a computer, functions in the foregoing method embodiments are implemented.

All or some of the foregoing embodiments may be implemented by using software, hardware, firmware, or any combination thereof. When implemented by using a software program, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such understanding, the technical solutions in this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce great effects.

## Claims

1. A communication method, wherein the method comprises:
receiving a quality of service QoS parameter for a first service from a core network element;
paging at least one terminal apparatus for executing the first service; and
scheduling, based on the QoS parameter when the at least one terminal apparatus for executing the first service is paged, the at least one terminal apparatus to execute the first service.

2. The method according to claim 1, wherein paging the at least one terminal apparatus for executing the first service comprises:
receiving first indication information from the core network element, wherein the first indication information indicates that the first service needs to be executed; and
paging, based on the first indication information, the at least one terminal apparatus for executing the first service.

3. The method according to claim 2, wherein the first indication information and the QoS parameter are carried in a same message.

4. The method according to any one of claims 1 to 3, wherein the QoS parameter comprises at least one of the following: a data transmission delay requirement for executing the first service, a priority of the first service, and a reliability requirement for transmitting the first service.

5. The method according to any one of claims 1 to 4, wherein the method further comprises:
sending second indication information to the core network element, wherein the second indication information indicates that the first service is executed by the terminal apparatus.

6. The method according to any one of claims 1 to 5, wherein the method further comprises:
sending third indication information to the core network element, wherein the third indication information indicates that scheduling of the first service is stopped or data transmission of the first service is stopped.

7. The method according to claim 6, wherein the third indication information comprises a reason for stopping the scheduling of the first service or a reason for stopping the data transmission of the first service.

8. The method according to any one of claims 1 to 5, wherein the method further comprises:
receiving fourth indication information from the core network element, wherein the fourth indication information indicates an access network device to stop data transmission of the first service.

9. A communication method, wherein the method comprises:
receiving identification information from an access network device, wherein the identification information is for identifying a quality of service QoS parameter; and
sending the identification information to the access network device when a first service needs to be executed.

10. The method according to claim 9, wherein receiving the identification information from the access network device comprises:
receiving, in a process in which a first terminal apparatus initiates registration, a registration accept message from the access network device, wherein the registration accept message comprises the identification information.

11. The method according to claim 9, wherein receiving the identification information from the access network device comprises:
receiving, in a process in which a first terminal apparatus performs transmission with the access network device, a first message from the access network device, wherein the first message comprises the identification information.

12. The method according to any one of claims 9 to 11, wherein sending the identification information to the access network device comprises:
sending, in a process in which the first terminal apparatus initiates random access again, the identification information to the access network device.

13. The method according to any one of claims 9 to 11, wherein sending the identification information to the access network device comprises:
sending an RRC message to the access network device, wherein the RRC message comprises the identification information.

14. The method according to any one of claims 9 to 13, wherein the QoS parameter comprises at least one of the following: a priority of the first service, a data transmission delay requirement for executing the first service, and a reliability requirement for transmitting the first service.

15. The method according to any one of claims 9 to 14, wherein the identification information is an identifier of the first terminal apparatus, or a QoS identifier, or a context identifier of the first terminal apparatus.

16. A communication method, wherein the method comprises:
receiving a quality of service QoS parameter from a core network element; and
sending identification information to a first terminal apparatus, wherein the identification information is for identifying the QoS parameter.

17. The method according to claim 16, wherein the method further comprises:
receiving the identification information from the first terminal apparatus; and
scheduling, based on the identification information, the first terminal apparatus to execute a first service.

18. The method according to claim 17, wherein receiving the identification information from the first terminal apparatus comprises:
receiving, in a process in which the first terminal apparatus initiates random access again, the identification information from the first terminal apparatus.

19. The method according to claim 17, wherein receiving the identification information from the first terminal apparatus comprises:
receiving a radio resource control RRC message from the first terminal apparatus, wherein the RRC message comprises the identification information.

20. The method according to any one of claims 16 to 19, wherein sending the identification information to the first terminal apparatus comprises:
sending, in a process in which the first terminal apparatus initiates registration, a registration accept message to the first terminal apparatus, wherein the registration accept message comprises the identification information.

21. The method according to any one of claims 16 to 19, wherein sending the identification information to the first terminal apparatus comprises:
sending, in a process in which the first terminal apparatus performs transmission with an access network device, a first message to the first terminal apparatus, wherein the first message comprises the identification information.

22. The method according to any one of claims 16 to 21, wherein the method further comprises:
still retaining context of the first terminal apparatus if the first terminal apparatus is released to an inactive state, or reselection occurs, or a cell handover to another access network device occurs, wherein the context of the first terminal apparatus comprises the QoS parameter.

23. The method according to any one of claims 16 to 22, wherein the QoS parameter comprises at least one of the following: a priority of the first service, a data transmission delay requirement for executing the first service, and a reliability requirement for transmitting the first service.

24. The method according to any one of claims 16 to 23, wherein the identification information is an identifier of the first terminal apparatus, or a QoS identifier, or a context identifier of the first terminal apparatus.

25. A communication apparatus, comprising a module configured to perform the method according to any one of claims 1 to 8, or comprising a module configured to perform the method according to any one of claims 9 to 15, or comprising a module configured to perform the method according to any one of claims 16 to 24.

26. A communication apparatus, comprising a processor, wherein the processor is configured to perform the method according to any one of claims 1 to 8, or is configured to perform the method according to any one of claims 9 to 15, or is configured to perform the method according to any one of claims 16 to 24.

27. A computer-readable storage medium, wherein the storage medium stores a computer program or instructions, and when the computer program or the instructions are executed by a communication apparatus, the method according to any one of claims 1 to 8 is implemented, or the method according to any one of claims 9 to 15 is implemented, or the method according to any one of claims 16 to 24 is implemented.

28. A computer program product, comprising computer program code, wherein when the computer program code is run on a communication apparatus, the communication apparatus implements the method according to any one of claims 1 to 8, or implements the method according to any one of claims 9 to 15, or implements the method according to any one of claims 16 to 24.
